# EUROPÄISCHE PATENTSCHRIFT

(11) **EP 3 803 830 B1**
(45) Veröffentlichungstag und Bekanntmachung des Hinweises auf die Patenterteilung: **20.03.2024**
(21) Anmeldenummer: 19727301.4
(22) Anmeldetag: 15.05.2019
(51) Int. Cl.: G08G 1/16, B60W 30/095, B60W 40/04, B60W 50/14

(54) **VERFAHREN ZUM WARNEN EINES FAHRERS EINES KRAFTFAHRZEUGS VOR EINER KOLLISION**
METHOD FOR WARNING A MOTOR VEHICLE DRIVER OF A COLLISION
PROCÉDÉ PERMETTANT DE METTRE EN GARDE UN CONDUCTEUR D'UN VÉHICULE AUTOMOBILE CONTRE UNE COLLISION

(30) Priorität: 07.06.2018 DE 102018209064
(43) Veröffentlichungstag der Anmeldung: 14.04.2021
(73) Patentinhaber: VOLKSWAGEN AKTIENGESELLSCHAFT, 38440 Wolfsburg (DE)
(72) Erfinder: GOHLKE, Daniel, 38553 Wasbüttel (DE)
(86) Internationale Anmeldenummer: PCT/EP2019/062519
(87) Internationale Veröffentlichungsnummer: WO 2019/233720

(56) Entgegenhaltungen:
- DE-A1-102009 020 649
- DE-A1-102013 001 228
- DE-A1-102014 016 567
- DE-A1-102014 017 594
- DE-A1-102014 206 341

## Beschreibung

Die Erfindung betrifft ein Verfahren zum Warnen eines Fahrers eines Kraftfahrzeugs vor einer Kollision.

Aus der DE 10 2011 115 878 A1 ist ein Verfahren zur Warnung des Fahrers eines Kraftfahrzeugs vor einer drohenden Kollision bekannt. Bei dem Verfahren wird eine Warnung an den Fahrer unter Berücksichtigung einer Fahrerreaktionszeit abgegeben. Hierbei sind eine minimale und eine maximale Fahrerreaktionszeit vorgegeben und es erfolgt eine Bestimmung einer Fahreraktivität. Eine aktuelle Fahrerreaktionszeit wird als Funktion der Fahreraktivität bestimmt. Mittels einer Warneinrichtung kann die Warnung als Funktion einer Kollisionsgefährdung erzeugt und ausgegeben werden.

Aus der DE 10 2009 020 649 A1 ist ein Ausweichassistent in einem Kraftfahrzeug bekannt, bei welchem im Falle einer drohenden Kollision des Kraftfahrzeugs mit einem Hindernisobjekt mehrere mögliche Ausweichtrajektorien für unterschiedliche Ausweichmanöver in Abhängigkeit von Zeitabstandswerten bestimmt werden. Die Zeitabstandswerte stellen die geschätzte Zeit dar, bis das Kraftfahrzeug bei einer aktuellen Fahrzeuggeschwindigkeit mit dem Hindernisobjekt kollidieren könnte, und bezeichnen verschiedene Auslöseschwellenwerte, bei welchem das jeweilige Ausweichmanöver, das der Ausweichtrajektorie des jeweiligen Zeitabstandswertes zugeordnet ist, ausgelöst wird. Die mehreren Ausweichmanöver umfassen dabei Ausweichmanöver mit geringen Kurvenbeschleunigungswerten bis hin zu einem Notausweichmanöver, bei welchem eine Kollision nur noch durch Ausweichen verhindert werden kann.

Aus der DE 10 2013 001 228 A1 ist ein Ausweichassistent in einem Kraftfahrzeug bekannt, bei welchem das Auslösen einer Notbremsung bei einer Bewegung des Kraftfahrzeugs auf ein Kollisionsobjekt zu unterdrückt werden soll, solange die Möglichkeit eines Ausweichmanövers besteht. Dabei wird bei den Hindernisobjekten zwischen mobilen und stationären Hindernisobjekten unterschieden, wobei bei einem mobilen Hindernisobjekt als Ausweichtrajektorie ein Spurwechsel und bei einem stationären Hindernisobjekt eine Kurvenfahrt ermittelt wird.

Aus der DE 10 2014 016 567 A1 ist ein Verfahren zum Bestimmen einer Ausweichtrajektorie für einen Ausweichassistenten in einem Kraftfahrzeug bekannt, bei welchem die Ausweichtrajektorie des Kraftfahrzeugs um ein Hindernisobjekt in Abhängigkeit von einer Relativgeschwindigkeit, den Abmessungen des Kraftfahrzeugs und des Hindernisobjektes und in Abhängigkeit von einem Abstand zwischen dem Kraftfahrzeug und dem Hindernisobjekt während des Ausweichens bestimmt wird.

Aus der DE 10 2014 206 341 A1 ist ein Ausweichassistent in einem Kraftfahrzeug bekannt, bei welchem eine Notwendigkeit für das Durchführen eines Ausweichmanövers des Kraftfahrzeugs vor einem Hindernisobjekt bestimmt wird und während des Ausweichmanövers der Fahrer beim Führen des Kraftfahrzeugs entlang einer Solltrajektorie mittels Lenk- und Bremseingriffen unterstützt wird.

Aus der DE 10 2014 017 594 A1 ist ein Ausweichassistent in einem Kraftfahrzeug bekannt, bei welchem für das Kraftfahrzeug zum Durchführen eines Ausweichmanövers vor einem Hindernisobjekt eine Solltrajektorie der Ausweichroute anhand idealer Fahrparameter, wie eine Reifenhaftung, bestimmt wird und bei einer Abweichung der aktuellen Ist-Trajektorie des Kraftfahrzeugs von der Solltrajektorie das Kraftfahrzeug auf eine alternative Trajektorie unter Berücksichtigung der aus der Abweichung aktuell bestimmten Fahrparameter zum Durchführen des Ausweichmanövers geführt wird.

Aufgabe der vorliegenden Erfindung ist es, ein Verfahren zum Warnen eines Fahrers eines Kraftfahrzeugs vor einer Kollision zu schaffen, mittels welchem unnötige Warnungen des Fahrers vermieden werden können.

Diese Aufgabe wird erfindungsgemäß durch ein Verfahren zum Warnen eines Fahrers eines Kraftfahrzeugs vor einer Kollision mit den Merkmalen des unabhängigen Patentanspruchs gelöst. Vorteilhafte Ausgestaltungen mit zweckmäßigen Weiterbildungen der Erfindung sind in den jeweils abhängigen Ansprüchen sowie in der folgenden Beschreibung angegeben.

Die Erfindung betrifft ein Verfahren zum Warnen eines Fahrers eines Kraftfahrzeugs vor einer Kollision, bei welchem mittels einer Sensoreinrichtung eine Ist-Trajektorie des Kraftfahrzeugs ermittelt wird. Unter der Ist-Trajektorie ist eine Ist-Bewegungskurve zu verstehen, auf deren Ursprung sich das Kraftfahrzeug zu einem jeweiligen Zeitpunkt befindet und entlang welcher sich das Kraftfahrzeug zukünftig wenigstens mit einer definierten Mindest-Wahrscheinlichkeit bewegen wird. Somit handelt es sich bei der Ist-Trajektorie um eine Prädiktion einer zukünftigen Bewegung des Kraftfahrzeugs. Die Ist-Trajektorie wird mehrmals in definierten Zeitabständen in Abhängigkeit von dem jeweiligen Standort und jeweiligen Fahrparametern des Kraftfahrzeugs ermittelt. Bei dem Verfahren ist des Weiteren vorgesehen, dass mittels einer Recheneinrichtung eine Soll-Trajektorie des Kraftfahrzeugs ermittelt wird. Die Soll-Trajektorie des Kraftfahrzeugs beschreibt eine Soll-Bewegungskurve, entlang welcher sich das Kraftfahrzeug idealerweise bewegen sollte. Mittels der Recheneinrichtung wird in einem weiteren Schritt eine Abweichung der Ist-Trajektorie von der Soll-Trajektorie ermittelt. Insbesondere wird hierbei ermittelt, inwieweit sich die Ist-Bewegungskurve, entlang welcher sich das Kraftfahrzeug bewegt, von der Soll-Bewegungskurve, entlang welcher sich das Kraftfahrzeug idealerweise bewegen soll, unterscheidet. Bei dem Verfahren ist des Weiteren vorgesehen, dass mittels der Recheneinrichtung ein zukünftiges Kollisionsereignis auf der Ist-Trajektorie ermittelt wird, wobei unter dem Kollisionsereignis eine voraussichtliche Kollision des Kraftfahrzeugs mit einem Objekt zu verstehen ist. Insbesondere wird bei diesem Schritt mittels der Recheneinrichtung ermittelt, zu welchem Zeitpunkt und/oder an welcher Position und/oder mit welcher Wahrscheinlichkeit die Kollision des Kraftfahrzeugs auf dessen Ist-Trajektorie mit dem Objekt auftritt. Anschließend wird mittels einer Ausgabeeinrichtung ein Warnhinweis im Innenraum des Kraftfahrzeugs in Abhängigkeit von dem ermittelten zukünftigen Kollisionsereignis und der ermittelten Abweichung ausgegeben. Somit wird der Warnhinweis zumindest dann ausgegeben, wenn die Ist-Trajektorie von der Soll-Trajektorie abweicht und das zukünftige Kollisionsereignis auf der Ist-Trajektorie ermittelt worden ist. Das bedeutet, dass der Warnhinweis an den Fahrer des Kraftfahrzeugs ausgegeben wird, sobald festgestellt wird, dass das Kraftfahrzeug, welches entlang der Ist-Trajektorie bewegt wird, die Soll-Trajektorie verlässt und auf der Ist-Trajektorie des Kraftfahrzeugs voraussichtlich eine Kollision des Kraftfahrzeugs mit dem Objekt auftreten wird, sofern das Kraftfahrzeug weiterhin der Ist-Trajektorie folgt. Damit wird der Fahrer des Kraftfahrzeugs gewarnt, wenn entlang der Ist-Trajektorie des Kraftfahrzeugs das Kollisionsereignis mit einer definierten Mindestwahrscheinlichkeit auftritt und das Kraftfahrzeug von der Soll-Trajektorie abweicht. Hierdurch kann ein Fahrer vor einer möglichen Kollision gewarnt werden, wenn das Kraftfahrzeug von seiner Soll-Bewegungskurve abkommt und die Ist-Bewegungskurve mit der definierten Mindestwahrscheinlichkeit zu dem Kollisionsereignis führt. Dies ermöglicht, dass ein unnötiges Warnen des Fahrers des Kraftfahrzeugs unterbunden werden kann und somit eine besonders hohe Aufmerksamkeit des Fahrers für im Innenraum des Kraftfahrzeugs ausgegebene Warnhinweise erreicht werden kann. Beispielsweise kann in Abhängigkeit von einer ermittelten definierten Mindestabweichung der Ist-Trajektorie von der Soll-Trajektorie ermittelt werden, dass sich das kollisionsrelevante Objekt mit einer definierten Mindest-Wahrscheinlichkeit nicht auf der Soll-Trajektorie und gegebenenfalls zusätzlich nicht innerhalb eines definierten Abstands zur Soll-Trajektorie befindet. Hieraus folgt, dass das Kollisionsereignis mit der definierten Mindest-Wahrscheinlichkeit nicht stattfindet, wenn das Kraftfahrzeug der Soll-Trajektorie folgt. Folgt das Kraftfahrzeug der Soll-Trajektorie nicht und die Ist-Trajektorie weicht somit von der Soll-Trajektorie ab, dann wird der Warnhinweis ausgegeben, sofern das Kollisionsereignis mit der definierten Mindestwahrscheinlichkeit auftritt, wenn das Kraftfahrzeug der Ist-Trajektorie folgt.

In diesem Zusammenhang hat es sich erfindungsgemäß erwiesen, wenn die Soll-Trajektorie in Abhängigkeit von einem Fahrbahnverlauf ermittelt wird. Mit anderen Worten wird der Fahrbahnverlauf in Abhängigkeit von einer Fahrbahn ermittelt, auf welcher sich das Kraftfahrzeug befindet, und der Fahrbahnverlauf als Soll-Trajektorie definiert. Somit beschreibt der Fahrbahnverlauf die Soll-Bewegungskurve für das Kraftfahrzeug. Ein Warnhinweis wird insbesondere dann im Innenraum des Kraftfahrzeugs ausgegeben, wenn das Kraftfahrzeug der Soll-Trajektorie folgt und sich auf der Soll-Trajektorie und/oder innerhalb des definierten Abstands zur Soll-Trajektorie ein kollisionsrelevantes Objekt befindet oder das Kraftfahrzeug der Ist-Trajektorie folgt, sich auf der Ist-Trajektorie und/oder innerhalb eines definierten Abstands zur Ist-Trajektorie ein kollisionsrelevantes Objekt befindet und das Kraftfahrzeug mit einer definierten Mindest-Wahrscheinlichkeit der Ist-Trajektorie unter Umgehung der Soll-Trajektorie folgen wird. Die definierte Mindest-Wahrscheinlichkeit, welche beschreibt, dass das Kraftfahrzeug der Ist-Trajektorie unter Umgehung der Soll-Trajektorie folgen wird, kann in Abhängigkeit von dem Fahrbahnverlauf, insbesondere in Abhängigkeit von einer Abfahrt und/oder einer Kreuzung und/oder einem Spurwechsel ermittelt werden. Ein Warnhinweis wird somit insbesondere ausgegeben, wenn das Kraftfahrzeug der Ist-Trajektorie folgt, die Ist-Trajektorie wenigstens um ein definiertes Maß vom Verlauf der Soll-Trajektorie abweicht und sich auf der Ist-Trajektorie und/oder innerhalb des definierten Abstands zur Ist-Trajektorie ein kollisionsrelevantes Objekt befindet, welches wenigstens einen definierten Mindest-Abstand von der Solltrajektorie entfernt ist, sodass angenommen werden kann, dass sich das Objekt mit der definierten Mindest-Wahrscheinlichkeit nicht auf der Soll-Trajektorie und gegebenenfalls zusätzlich nicht innerhalb eines definierten Abstands zur Soll-Trajektorie befindet. Folglich wird dem Fahrer des Kraftfahrzeugs insbesondere dann ein Warnhinweis hinsichtlich eines sich beabstandet von der Fahrbahn der Soll-Trajektorie des Kraftfahrzeugs befindenden Objekts bezüglich einer Kollision ausgegeben, sofern das Kraftfahrzeug den Fahrbahnverlauf der Soll-Trajektorie verlässt. Dies ermöglicht, dass eine unnötige Warnung des Fahrers hinsichtlich sich beabstandet von dem Fahrbahnverlauf der Soll-Trajektorie befindenden Objekten unterbunden werden kann.

Erfindungsgemäß ist vorgesehen, dass ein Ausweichpunkt auf der Ist-Trajektorie ermittelt wird, welcher einen spätestmöglichen Anfangszeitpunkt eines Ausweichmanövers zum Umgehen des Kollisionsereignisses mit vorgegebenen Fahrparametern des Kraftfahrzeugs charakterisiert und der Warnhinweis in Abhängigkeit von dem ermittelten Ausweichpunkt ausgegeben wird. Bei dem Ausweichpunkt handelt es sich somit um eine Position auf der Ist-Trajektorie des Kraftfahrzeugs, an welcher der Fahrer des Kraftfahrzeugs spätestens das Ausweichmanöver einleiten sollte, um mit den vorgegebenen Fahrparametern des Kraftfahrzeugs das Kollisionsereignis mit dem sich auf der Ist-Trajektorie des Kraftfahrzeugs befindenden Objekt zu umgehen. Die vorgegebenen Fahrparameter können in der Recheneinrichtung vorgegeben sein und/oder in Abhängigkeit von der Ist-Trajektorie des Kraftfahrzeugs ermittelt werden und/oder in Abhängigkeit von einer Fahreraktivität des Fahrers des Kraftfahrzeugs ermittelt werden. Insbesondere kann der Warnhinweis in Abhängigkeit davon ausgegeben werden, wie weit ein Abstand eines Standorts des Kraftfahrzeugs zum Ausweichpunkt ist und/oder wie lange das Kraftfahrzeug zum Zurücklegen einer Strecke von dessen Standort bis zum Ausweichpunkt benötigt. Ist ein Abstand zwischen dem Standort des Kraftfahrzeugs und dem Ausweichpunkt größer als ein definierter Mindestabstand, beziehungsweise ist eine Zeitspanne zum Zurücklegen der Strecke bei definierten Fahrparametern des Kraftfahrzeugs größer als eine definierte Mindestzeitspanne, so wird das Ausgeben des Warnhinweises unterbunden, wohingegen der Warnhinweis an den Fahrer beziehungsweise im Innenraum des Kraftfahrzeugs ausgegeben wird, wenn der Abstand kleiner gleich dem Mindestabstand und/oder die Zeitspanne kleiner gleich der Mindestzeitspanne ist. Hierdurch kann gewährleistet werden, dass der Warnhinweis im Innenraum des Kraftfahrzeugs lediglich dann ausgegeben wird, wenn der Ausweichpunkt innerhalb der definierten Mindestzeitspanne und/oder innerhalb des definierten Mindestabstands erreicht wird. Ein unnötiges Warnen des Fahrers kann hierdurch vorteilhafterweise vermieden werden.

Für die Erfindung hat es sich erwiesen, wenn der Ausweichpunkt in Abhängigkeit von der ermittelten Abweichung zwischen der Ist-Trajektorie und der Soll-Trajektorie ermittelt wird. Das bedeutet, dass eine Position des Ausweichpunktes auf der Ist-Trajektorie in Abhängigkeit davon ermittelt wird, wie stark und auf welche Art die Ist-Trajektorie von der Soll-Trajektorie abweicht. Weicht die Ist-Trajektorie stärker von der Soll-Trajektorie ab, so ist der Abstand des Ausweichpunktes zum Kollisionspunkt größer, als wenn die Ist-Trajektorie weniger von der Soll-Trajektorie abweicht. Da der Warnhinweis in Abhängigkeit von dem Ausweichpunkt und insbesondere in Abhängigkeit einer Relativposition des Standorts des Kraftfahrzeugs zum Ausweichpunkt ausgegeben wird, und der Ausweichpunkt in Abhängigkeit von der Abweichung zwischen der Ist-Trajektorie und der Soll-Trajektorie ermittelt wird, wird der Warnhinweis ebenfalls in Abhängigkeit von der Abweichung zwischen der Ist-Trajektorie und der Soll-Trajektorie ausgegeben. Folglich wird der Startzeitpunkt des Ausgebens des Warnhinweises vor dem ermittelten Kollisionszeitpunkt in Abhängigkeit von der Abweichung zwischen der Ist-Trajektorie und der Soll-Trajektorie ermittelt. Je stärker die Abweichung zwischen der Ist-Trajektorie und der Soll-Trajektorie ist, desto früher vor dem Kollisionszeitpunkt wird der Warnhinweis im Innenraum des Kraftfahrzeugs ausgegeben. Hierdurch kann sichergestellt werden, dass das Ausweichmanöver derart durchführbar ist, sodass das Kollisionsereignis vermieden werden kann.

Bei der Erfindung wird nur bei erkannten Nebenspurobjekten, das bedeutet nur, falls sich das als kollisionsrelevant eingestufte Objekt auf der zu der ersten Fahrbahn unterschiedlichen zweiten Fahrbahn befindet, die Mindest-Fahrerreaktionszeit angepasst und damit beispielsweise ein im Vergleich zur Fahrerreaktionszeit vor der Anpassung späterer Warnzeitpunkt zum Ausgeben des Warnhinweises im Innenraum des Kraftfahrzeugs erzielt.

Es hat sich als weiterhin vorteilhaft gezeigt, wenn der Fahrbahnverlauf mittels Sensordaten und/oder in Abhängigkeit von Kartendaten ermittelt wird. Mit anderen Worten können mittels einer Sensoreinrichtung des Kraftfahrzeugs und/oder einer Verkehrsinfrastrukturkomponente die Sensordaten erfasst werden, anhand welcher der Fahrbahnverlauf ermittelbar ist. Alternativ oder zusätzlich kann die Recheneinrichtung die Kartendaten beispielsweise von einer externen Recheneinrichtung des Internets und somit einer Servereinrichtung empfangen, wobei die Kartendaten den Fahrbahnverlauf charakterisieren. Bei der Sensoreinrichtung des Kraftfahrzeugs kann es sich beispielsweise um eine Kameraeinrichtung und/oder einen Lidar und/oder ein Radar und/oder eine Ultraschalleinrichtung handeln, mittels welcher der Fahrbahnverlauf beispielsweise anhand von Straßenmarkierungen ermittelbar ist. Mittels der Sensordaten und/oder der Kartendaten ist der Fahrbahnverlauf besonders genau und beispielsweise hochaktuell ermittelbar, sodass die Soll-Trajektorie des Kraftfahrzeugs besonders vorteilhaft ermittelt werden kann.

Es hat sich hierbei als vorteilhaft erwiesen, wenn das von dem Ausweichpunkt startende Ausweichmanöver einen Bewegungsverlauf charakterisiert, bei welchem das Kraftfahrzeug zu einem ermittelten Kollisionszeitpunkt des Kollisionsereignisses und/oder in einer ermittelten Kollisionsentfernung zum Ausweichpunkt die Soll-Trajektorie erreicht. Das bedeutet, dass der Ausweichpunkt derart ermittelt wird, dass mit den vorgegebenen Fahrparametern das Kraftfahrzeug zum ermittelten Kollisionszeitpunkt des Kollisionsereignisses und/oder in der ermittelten Kollisionsentfernung zum Ausweichpunkt auf der Soll-Trajektorie angeordnet ist. Insbesondere ist somit das Kraftfahrzeug nach Durchführung des Ausweichmanövers von dem Ausweichpunkt ausgehend wieder auf dessen Fahrbahnverlauf der Soll-Trajektorie angeordnet. Das Ausgeben des Warnhinweises im Innenraum des Kraftfahrzeugs ermöglicht, dass der Fahrer spätestens an dem Ausweichpunkt das Ausweichmanöver beginnen kann und somit zum Kollisionszeitpunkt und/oder bei der Kollisionsentfernung zum Ausweichpunkt seinen Fahrbahnverlauf erreicht und das Kollisionsereignis zumindest mit definierter Wahrscheinlichkeit vermieden werden kann. Das Verfahren ermöglicht somit zum einen, dass das Kollisionsereignis vermieden werden kann und zum anderen, dass das Kraftfahrzeug zu dem voraussichtlichen Kollisionszeitpunkt und/oder in der voraussichtlichen Kollisionsentfernung zum Ausweichpunkt wieder auf dessen ursprünglicher Fahrbahn angeordnet ist. Insbesondere dient das Verfahren einem Unterbinden eines unnötigen Ausgebens des Warnhinweises im Innenraum des Kraftfahrzeugs.

Es hat sich in weiterer Ausgestaltung der Erfindung als vorteilhaft gezeigt, wenn der Warnhinweis ab einer definierten Mindest-Fahrerreaktionszeit vor einem voraussichtlichen Erreichen des ermittelten Ausweichpunkts im Innenraum des Kraftfahrzeugs ausgegeben wird. Dies bedeutet, dass es sich bei der Mindest-Fahrerreaktionszeit insbesondere um die Mindestzeitspanne handelt, welche die Zeitspanne charakterisiert, während welcher der Warnhinweis an den Fahrer des Kraftfahrzeugs beziehungsweise im Innenraum des Kraftfahrzeugs ausgegeben wird. Die Mindest-Fahrerreaktionszeit beschreibt eine Zeitspanne, die dem Fahrer zum Reagieren auf das bevorstehende Kollisionsereignis zur Verfügung steht, bis der Ausweichpunkt erreicht ist. Während der Mindest-Fahrerreaktionszeit bewegt sich das Kraftfahrzeug voraussichtlich mit gleichförmiger Bewegung und Geschwindigkeit fort, da der Fahrer die Mindest-Fahrerreaktionszeit zum Einleiten einer Reaktion benötigt. Durch das Ausgeben des Warnhinweises ab der definierten Mindest-Fahrerreaktionszeit vor dem voraussichtlichen Erreichen des Ausweichpunktes kann sichergestellt werden, dass der Fahrer des Kraftfahrzeugs nicht zu spät vor dem drohenden Kollisionsereignis gewarnt wird, sondern rechtzeitig vor dem Kollisionsereignis gewarnt wird, sodass der Fahrer spätestens an dem Ausweichzeitpunkt das Ausweichmanöver einleiten kann. Diese Mindest-Fahrerreaktionszeit kann in Abhängigkeit von einem Fahrerverhalten ermittelt werden und/oder in der Recheneinrichtung vorgegeben sein. Somit wird der Warnhinweis ausgebeben, sobald das Zeitintervall der Mindest-Fahrerreaktionszeit vor Erreichen des Ausweichpunktes läuft. Insbesondere wird der Warnhinweis im Innenraum des Kraftfahrzeugs ausgegeben, wenn das Kraftfahrzeug um ein definiertes Maß von dessen Fahrbahnverlauf entsprechend der Soll-Trajektorie abweicht. Das definierte Maß kann eine prozentuale Mindestabweichung sein. Eine unnötige Warnung des Fahrers bei Abweichungen der Ist-Trajektorie unterhalb des definierten Maßes von der Soll-Trajektorie kann somit vermieden werden, sodass der Fahrer des Kraftfahrzeugs vorteilhafterweise nicht durch unnötige Warnhinweise belästigt wird.

In weiterer vorteilhafter Ausgestaltung der Erfindung ist vorgesehen, dass die ermittelte Mindest-Fahrerreaktionszeit durch wenigstens eine definierte Grenze nach oben und/oder nach unten begrenzt ist. Das bedeutet, dass für die Mindest-Fahrerreaktionszeit eine obere Grenze und/oder eine untere Grenze festgelegt sind. Bei der unteren Grenze kann es sich um eine minimale Fahrreaktionszeit handeln, unter welcher die definierte Mindest-Fahrerreaktionszeit nicht fällt. Bei der oberen Grenze kann es sich um eine maximale Fahrerreaktionszeit handeln, über welche sich die definierte Mindest-Fahrerreaktionszeit nicht hinaus bewegen darf. Somit wird der Fahrer des Kraftfahrzeugs frühestens bei der maximalen Fahrerreaktionszeit und spätestens bei der minimalen Fahrerreaktionszeit durch das Ausgeben des Warnhinweises im Innenraum des Kraftfahrzeugs vor dem Kollisionsereignis gewarnt. Hierdurch kann eine zu späte Warnung des Fahrers des Kraftfahrzeugs sowie eine unnötig frühe Warnung des Fahrers des Kraftfahrzeugs vorteilhafterweise vermieden werden.

In einer weiteren vorteilhaften Ausgestaltung der Erfindung ist vorgesehen, dass die Ist-Trajektorie in Abhängigkeit von einer Beschleunigung und/oder Geschwindigkeit und/oder Bewegungsrichtung des Kraftfahrzeugs ermittelt wird. Hierbei kann die Beschleunigung und/oder die Geschwindigkeit und/oder die Bewegungsrichtung des Kraftfahrzeugs mittels einer Sensoreinrichtung des Kraftfahrzeugs, insbesondere mittels eines Beschleunigungssensors und/oder mittels eines Positionssensors und/oder mittels eines Geschwindigkeitssensors ermittelt werden. Bei dem Richtungssensor kann es sich beispielsweise um einen Giersensor handeln. Bei dem Positionssensor kann es sich beispielsweise um einen Satellitennavigationssensor zum Ermitteln von Satellitennavigationsdaten zur Positionsbestimmung handeln. In Abhängigkeit von der Beschleunigung und/oder der Geschwindigkeit und/oder der Bewegungsrichtung des Kraftfahrzeugs kann die Bewegungskurve und somit die Ist-Trajektorie des Kraftfahrzeugs besonders vorteilhaft ermittelt werden. Beim Ermitteln der Ist-Trajektorie wird insbesondere eine aktuelle Beschleunigung und/oder Geschwindigkeit und/oder Bewegungsrichtung des Kraftfahrzeugs in die Zukunft extrapoliert. Somit kann vorteilhafterweise in Abhängigkeit von aktuellen Bewegungsdaten des Kraftfahrzeugs dessen zukünftige voraussichtliche Bewegung und Position ermittelt werden.

In weiterer Ausgestaltung der Erfindung hat es sich als vorteilhaft gezeigt, wenn das Kollisionsereignis in Abhängigkeit von einer Position und/oder Bewegung des Objekts ermittelt wird, welches voraussichtlich gleichzeitig mit dem Kraftfahrzeug eine Kollisionsposition der Ist-Trajektorie erreicht. Insbesondere ist das Objekt zum Kollisionszeitpunkt des Kollisionsereignisses zusammen mit dem Kraftfahrzeug an der Kollisionsposition, sodass an der Kollisionsposition das Kollisionsereignis voraussichtlich und folglich wenigstens mit einer definierten Mindest-Wahrscheinlichkeit stattfindet. Somit kann bei dem Verfahren zum einen eine aktuelle Position des Objekts bei der Ermittlung des Kollisionsereignisses mit einbezogen werden, als auch eine voraussichtliche zukünftige Position des Objekts. Es können somit vorteilhafterweise Kollisionsereignisse des Kraftfahrzeugs sowohl mit statischen als auch mit bewegten Objekten auf der Ist-Trajektorie ermittelt werden. Bei dem Objekt kann es sich beispielsweise um einen zu dem Kraftfahrzeug weiteren Verkehrsteilnehmer handeln. Beispielsweise bewegt sich das Objekt auf einem zu dem Fahrbahnverlauf der Soll-Trajektorie unterschiedlichen Fahrbahnverlauf, welcher von der Ist-Trajektorie im Kollisionspunkt zumindest im Kollisionspunkt geschnitten wird. Hierdurch kann das Kollisionsereignis mit besonders hoher Präzision und mit besonders hoher Sicherheit ermittelt werden.

Im Folgenden ist ein Ausführungsbeispiel der Erfindung beschrieben. Hierzu zeigt:
- Fig. 1: eine schematische Draufsicht auf ein Kraftfahrzeug, welches sich entlang eines Fahrbahnverlaufs einer Soll-Trajektorie bewegt, wobei auf einer zu einer den Fahrbahnverlauf aufweisenden Fahrbahn unterschiedlichen weiteren Fahrbahn sich ein Objekt befindet, mit welchem das Kraftfahrzeug kollidieren würde, falls es die Soll-Trajektorie verlässt;
- Fig. 2: eine schematische Seitenansicht der Verkehrssituation gemäß Fig. 1 in Fahrtrichtung des Kraftfahrzeugs, wobei das Kraftfahrzeug der durch den Fahrbahnverlauf vorgegebenen Soll-Trajektorie folgt und somit eine Ist-Trajektorie des Kraftfahrzeugs der Soll-Trajektorie entspricht; und
- Fig. 3: ein Liniendiagramm einer Fahrsituation, in welcher die Ist-Trajektorie des Kraftfahrzeugs von der Soll-Trajektorie des Kraftfahrzeugs abweicht und ein Kollisionsereignis mit einer definierten Mindestwahrscheinlichkeit auftritt, sofern das Kraftfahrzeug der Ist-Trajektorie weiter folgt.

Bei dem im Folgenden erläuterten Ausführungsbeispiel handelt es sich um eine bevorzugte Ausführungsform der Erfindung.

Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

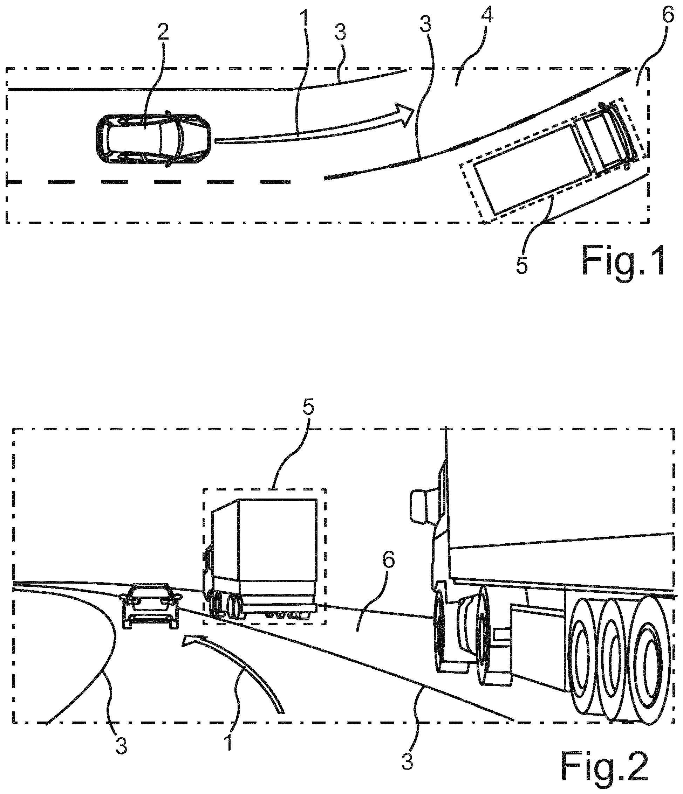

In Fig. 1 ist in einer schematischen Draufsicht und in Fig. 2 ist in einer schematischen Seitenansicht jeweils eine Verkehrssituation dargestellt, in welcher eine Ist-Trajektorie 1 eines Kraftfahrzeugs 2 einer vorgegebenen Soll-Trajektorie 3 folgt. Vorliegend wird die Soll-Trajektorie 3 durch einen Fahrbahnverlauf der Fahrbahn definiert, auf welcher sich das Kraftfahrzeug 2 befindet. Hierbei kann der Fahrbahnverlauf mittels von einer Sensoreinrichtung des Kraftfahrzeugs 2 erfassten Sensordaten und/oder in Abhängigkeit von einer zu dem Kraftfahrzeug 2 externen Recheneinrichtung, insbesondere einer Servereinrichtung des Internets, bereitgestellten Kartendaten ermittelt werden. Des Weiteren kann in Abhängigkeit von den Sensordaten und/oder in Abhängigkeit von den Kartendaten und/oder in Abhängigkeit von Positionsdaten des Kraftfahrzeugs eine Fahrbahnzuordnung für das Kraftfahrzeug zu einer ersten Fahrbahn 4 erfolgen. Insbesondere kann dann der Fahrbahnverlauf beziehungsweise die Soll-Trajektorie 3 mittels einer zweiten Recheneinrichtung des Kraftfahrzeugs 2 ermittelt werden. Um zu ermitteln, ob sich das Kraftfahrzeug 2 auf der durch die Soll-Trajektorie 3 vorgegebenen Fahrbahn 4 bewegt und dieser folgt, wird die Ist-Trajektorie des Kraftfahrzeugs 2 mittels der zweiten Recheneinrichtung des Kraftfahrzeugs 2 ermittelt. Hierbei können insbesondere mittels einer Sensoreinrichtung des Kraftfahrzeugs 2 eine Beschleunigung und/oder eine Geschwindigkeit und/oder eine Bewegungsrichtung und/oder eine Position des Kraftfahrzeugs 2 ermittelt werden und in Abhängigkeit von der Beschleunigung und/oder der Geschwindigkeit und/oder der Bewegungsrichtung und/oder der Position die Ist-Trajektorie 1 des Kraftfahrzeugs 2 ermittelt werden. Um einen Fahrer des Kraftfahrzeugs 2 mittels eines Fahrerassistenzsystems des Kraftfahrzeugs 2 besonders vorteilhaft vor einer Kollision warnen zu können, wird mittels der zweiten Recheneinrichtung des Kraftfahrzeugs 2 wenigstens ein Objekt 5 innerhalb eines definierten Abstands zum Kraftfahrzeug 2 ermittelt. Hierbei können eine Position und/oder eine Bewegung und somit Beschleunigung und/oder Geschwindigkeit und/oder Bewegungsrichtung des Objekts 5 ermittelt werden. Insbesondere kann in Abhängigkeit von der Position und/oder der Bewegung des Objekts 5 ermittelt werden, ob sich das Objekt 5 auf der ersten Fahrbahn 4 befindet, auf welcher sich das Kraftfahrzeug 2 befindet, oder ob sich das Objekt 5 auf einer zu der ersten Fahrbahn 4 unterschiedlichen zweiten Fahrbahn 6 befindet und somit beabstandet von der Soll-Trajektorie 3 des Kraftfahrzeugs 2 befindet. In Abhängigkeit von der Position und/oder der Bewegung des Objekts 5 kann ein Kollisionsereignis des Kraftfahrzeugs 2 mit dem Objekt 5 ermittelt werden, falls sich das Objekt 5 voraussichtlich gleichzeitig mit dem Kraftfahrzeug 2 auf einer Kollisionsposition 7 auf der Ist-Trajektorie 1 des Kraftfahrzeugs 2 befindet.

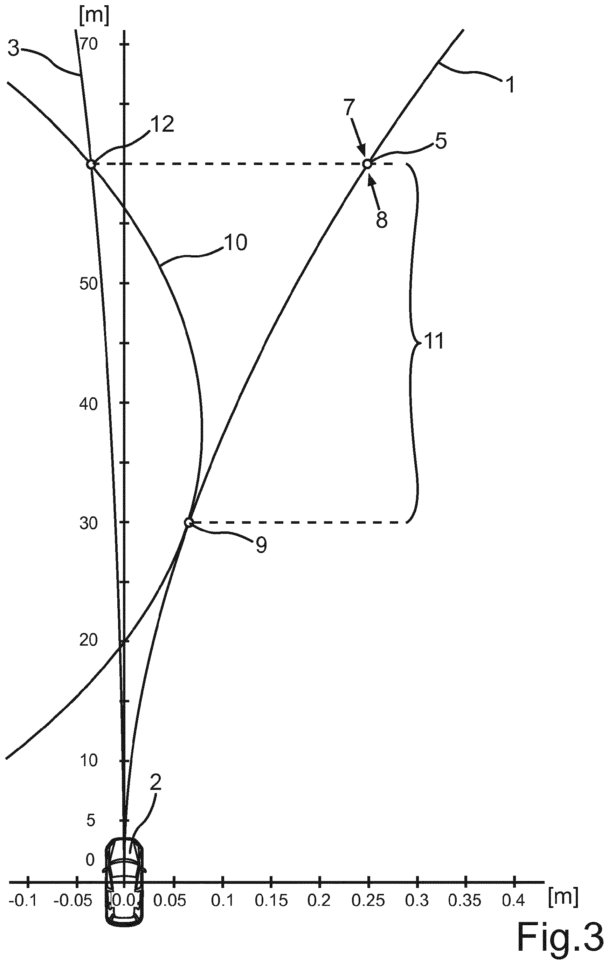

In Fig. 3 sind in einem Liniendiagramm die Soll-Trajektorie 3 und die Ist-Trajektorie 1 dargestellt. In der mit dem Diagramm in Fig. 3 dargestellten Verkehrssituation weicht die Ist-Trajektorie 1 von der Soll-Trajektorie 3 des Kraftfahrzeugs 2 ab, was bedeutet, dass das Kraftfahrzeug 2 von dem durch die erste Fahrbahn 4 vorgegebenen Fahrbahnverlauf abweicht. Mittels der zweiten Recheneinrichtung des Kraftfahrzeugs 2 ist die Abweichung der Ist-Trajektorie 1 von der Soll-Trajektorie 3 ermittelbar. In dem Diagramm in Fig. 3 kann erkannt werden, dass die Ist-Trajektorie 1 gleichzeitig mit dem Objekt 5 die Kollisionsposition 7 erreicht. Folglich wird anhand der Ist-Trajektorie 1 ein zukünftiges Kollisionsereignis 8 an der Kollisionsposition 7 ermittelt. Bei ermitteltem Kollisionsereignis 8 wird mittels einer Ausgabeeinrichtung ein Warnhinweis im Innenraum des Kraftfahrzeugs 2 in Abhängigkeit von dem ermittelten zukünftigen Kollisionsereignis ausgegeben, um den Fahrer des Kraftfahrzeugs 2 vor dem Kollisionsereignis 8 zu warnen.

Um den Fahrer des Kraftfahrzeugs 2 besonders vorteilhaft warnen zu können, wird ein Ausweichpunkt 9 ermittelt, welcher auf der Ist-Trajektorie 1 liegt und welcher einen spätestmöglichen Anfangszeitpunkt eines Ausweichmanövers zum Umgehen des Kollisionsereignisses 8 mit vorgegebenen Fahrparametern 10 des Kraftfahrzeugs 2 charakterisiert, wobei das Kraftfahrzeug 2 bei Durchführen des Ausweichmanövers mit den vorgegebenen Fahrparametern 10 in einer Kollisionsentfernung 11, welche einen Abstand zwischen einem Standort des Kraftfahrzeugs 2 und dem Kollisionspunkt 7 charakterisiert, die Soll-Trajektorie 3 an einem Zielpunkt 12 erreicht. Der Ausweichpunkt wird insbesondere in Abhängigkeit von einer Abweichung der Ist-Trajektorie von der Soll-Trajektorie ermittelt. Je größer die ermittelte Abweichung der Ist-Trajektorie von der Soll-Trajektorie ist, desto größer wird die Kollisionsentfernung 11 zwischen dem Kollisionsereignis und dem ermittelten Ausweichpunkt 9 gewählt. Bei dem Ausweichmanöver ist das Kraftfahrzeug 2 in der Kollisionsentfernung 11 zum Ausweichpunkt 9 am Zielpunkt 12 auf der Soll-Trajektorie 3 angeordnet anstatt an der Kollisionsposition 7 der Ist-Trajektorie 1. Folglich ist nach dem Ausweichmanöver das Kollisionsereignis 8 umgangen und das Kraftfahrzeug 2 wieder auf dessen Ausgangsfahrspur, insbesondere der ersten Fahrbahn 4, angeordnet.

Um zu gewährleisten, dass der Fahrer des Kraftfahrzeugs 2 spätestens zum Ausweichzeitpunkt 9 das Ausweichmanöver einleitet, wird im Innenraum des Kraftfahrzeugs 2 der Warnhinweis in Abhängigkeit von einem Abstand zwischen dem Standort des Kraftfahrzeugs 2 und dem Ausweichpunkt 9 und/oder in Abhängigkeit von einer Zeitspanne zum Zurücklegen der Strecke von dem Standort des Kraftfahrzeugs 2 bis zu dem Ausweichpunkt 9 ausgegeben. Insbesondere wird im Innenraum des Kraftfahrzeugs 2 der Warnhinweis während einer definierten Zeitspanne vor einem voraussichtlichen Ankunftszeitpunkt des Kraftfahrzeugs 2 an dem Ausweichpunkt 9 ausgegeben. Hierbei kann die definierte Zeitspanne durch eine definierte Mindest-Fahrerreaktionszeit vorgegeben sein. Diese Mindest-Fahrerreaktionszeit kann in Abhängigkeit von einer Fahreraktivität des Fahrers des Kraftfahrzeugs 2 ermittelt werden und/oder vorgegeben sein. Insbesondere ist die Mindest-Fahrerreaktionszeit durch wenigstens eine definierte Grenze nach oben und durch wenigstens eine definierte Grenze nach unten begrenzt. Das bedeutet, dass der Warnhinweis im Innenraum des Kraftfahrzeugs 2 zumindest dann ausgegeben wird, wenn die Ist-Trajektorie 1 von der Soll-Trajektorie 3 wenigstens um das definierte Maß abweicht, das Kollisionsereignis 8 auf der Ist-Trajektorie 1 voraussichtlich mit einer definierten Mindestwahrscheinlichkeit auftritt und die Zeitspanne zum Zurücklegen der Strecke von dem Standort des Kraftfahrzeugs 2 bis zu dem Ausweichpunkt 9, welche das Kraftfahrzeug 2 benötigt, um die Strecke zurückzulegen, kleiner oder gleich der unteren definierten Grenze der Mindest-Fahrerreaktionszeit ist. Insbesondere wird der Warnhinweis im Innenraum des Kraftfahrzeugs 2 ausgegeben, bis der Fahrer des Kraftfahrzeugs 2 das Ausweichmanöver einleitet und/oder das Kraftfahrzeug den Ausweichpunkt 9 erreicht hat und/oder das Kraftfahrzeug 2 am Zielpunkt 12 und die Soll-Trajektorie 3 erreicht hat.

Dem beschriebenen Verfahren liegt die Erkenntnis zugrunde, dass es in seltenen Fällen bei Notbremsassistenten zu unerwünschten Fahrerwarnungen auf langsam bewegte Objekte auf einer Gegenspur, insbesondere der zweiten Fahrbahn 6, oder stehender Objekte hinter Kurven oder auf Fahrinseln kommen kann. Diese Einschränkung einer Robustheit des Notbremsassistenten kann zu einer niedrigen Fahrerakzeptanz für den Notbremsassistenten führen. Mittels des Verfahrens lassen sich unerwünschte Fahrerwarnungen bezüglich des Objekts 5 auf der Nebenspur beziehungsweise der zweiten Fahrbahn 6 besonders gering halten oder ganz vermeiden. Hierbei kann eine Berechnung einer Kollisionsgefahr durch eine Anpassung der Mindest-Fahrerreaktionszeit verändert werden, sodass eine Warnung im Vergleich zu herkömmlichen Warnsystemen besonders spät erfolgt. Bei dem Verfahren werden insbesondere mittels eines Notbremsassistenten, vorliegend mittels der zweiten Recheneinrichtung des Kraftfahrzeugs 2, Hypothesen über Bewegungen aller als kollisionsrelevant für das Kraftfahrzeug 2 eingestuften Objekte 5 aufgestellt. In einer Modellierung einer eigenen Bewegung des Kraftfahrzeugs 2 wird dem Fahrer des Kraftfahrzeugs 2 eine Fahrerreaktionszeit zugeordnet. Die Fahrerreaktionszeit soll eine sogenannte Schrecksekunde abbilden. Während der Fahrerreaktionszeit wird eine Fahrbewegung des Kraftfahrzeugs 2 gleichförmig weitergeführt. Erst nach Ablauf der Fahrerreaktionszeit kann ein Brems- oder Ausweichmanöver modelliert werden, da der Fahrer vermutlich vorher nicht reagieren wird. Bei der Mindest-Fahrerreaktionszeit handelt es sich vorliegend um einen heuristisch ermittelten Wert für die Fahrerreaktionszeit aus einer Bewertung der aktuellen Fahreraktivität, insbesondere in Abhängigkeit von Lenkbewegungen und/oder Fahrpedalbewegungen des Kraftfahrzeugs 2. Bei dem beschriebenen Verfahren wird die Mindest-Fahrerreaktionszeit in bestimmten Situationen künstlich kurz gehalten. Hierfür wird aus den Sensordaten ein Umgebungsmodell aufgebaut, welches eine Spurzuordnung für das Kraftfahrzeug 2 sowie für die als kollisionsrelevant eingestuften Objekte 5 ermöglicht. Des Weiteren werden jeweilige Fahrbahnverläufe der ersten Fahrbahn 4 und der zweiten Fahrbahn 6 und gegebenenfalls weiterer Fahrbahnen ermittelt. Nach der Spurzuordnung kann jedes als kollisionsrelevant eingestuftes Objekt 5 der ersten Fahrbahn 4 oder der zweiten Fahrbahn 6 oder einer der weiteren Fahrbahnen zugeordnet werden. Durch eine Parametrierung der Mindest-Fahrerreaktionszeit kann eine frühere oder eine spätere Auslösung der Fahrerwarnung erzielt werden. Die Mindest-Fahrerreaktionszeit wird im Rahmen des Verfahrens angepasst, wenn das Objekt 5 zuverlässig, das bedeutet mit einer definierten Mindestwahrscheinlichkeit, der Nebenspur und somit der zweiten Fahrbahn 6 zugeordnet werden konnte. Nachdem das Objekt 5 zuverlässig der Nebenspur zugeordnet werden konnte, wird die Mindest-Fahrerreaktionszeit der Kollisionsvorhersage angepasst, da der Fahrer bei einer Wahrnehmung seiner Fahraufgabe seiner eigenen Fahrspur und somit der ersten Fahrbahn mit hoher Wahrscheinlichkeit folgen wird. Ein Fahren einer Kurve ist ein geplantes Fahrmanöver und keine Fahrerreaktion auf eine unvorhergesehene Situation.

Bei dem Verfahren wird nur bei erkannten Nebenspurobjekten, das bedeutet nur, falls sich das als kollisionsrelevant eingestufte Objekt 5 auf der zu der ersten Fahrbahn 4 unterschiedlichen zweiten Fahrbahn 6 befindet, die Mindest-Fahrerreaktionszeit angepasst und damit beispielsweise ein im Vergleich zur Fahrerreaktionszeit vor der Anpassung späterer Warnzeitpunkt zum Ausgeben des Warnhinweises im Innenraum des Kraftfahrzeugs 2 erzielt.

Im Folgenden wird die Berechnung der angepassten Mindest-Fahrerreaktionszeiten erläutert. In Abhängigkeit von dem Fahrbahnverlauf der ersten Fahrbahn 4 und somit der Soll-Trajektorie 3 und Positionsdaten und/oder Bewegungsdaten der Nebenspurobjekte, welche als kollisionsrelevant eingestuft worden sind, kann eine Entfernung ermittelt werden, auf der der Fahrer mit einem Ausweichmanöver beziehungsweise einem Lenkmanöver beginnen müsste, um die erste Fahrbahn 4 und somit die Soll-Trajektorie 3 in der Entfernung des Kollisionsereignisses 8 zu erreichen. Hierbei handelt es sich um den Ausweichpunkt 9. Die Mindest-Fahrerreaktionszeit wird so angepasst, dass sich das Kraftfahrzeug 2 nach Ablauf der Mindest-Fahrerreaktionszeit an dem Ausweichpunkt 9 befindet, von dem mithilfe einer Ausweichbewegungshypothese, bei welcher es sich um die vorgegebenen Fahrparameter 10 des Kraftfahrzeugs 2 handelt, der Fahrbahnverlauf der ersten Fahrbahn 4 noch erreicht werden kann. In Abbildung 3 ist das Verfahren exemplarisch dargestellt. Die Ist-Trajektorie 1 ist eine Prädiktion des Kraftfahrzeugs 2. In 60 Meter Entfernung zum Standort des Kraftfahrzeugs 2 befindet sich das Objekt 5, das sich innerhalb der aktuellen Prädiktion des Kraftfahrzeugs 2 befindet und somit als kollisionsrelevant angenommen wird. Die Soll-Trajektorie 3 beschreibt einen Fahrbahnverlauf der ersten Fahrbahn 4. Da angenommen werden kann, dass der Fahrer dem Fahrbahnverlauf der Soll-Trajektorie 3 folgen wird, wird der Ausweichpunkt 9 ermittelt, von welchem der Fahrer mit den vorgegebenen Fahrparametern 10, insbesondere der vorgegebenen Beschleunigungsannahmen, die Soll-Trajektorie 3 in der Kollisionsentfernung 11 des Kollisionsobjekts 5 erreichen kann. Am Zielpunkt 12 würde das Kraftfahrzeug 2 in der Kollisionsentfernung 11 die Soll-Trajektorie 3 erreichen. Die Zeitspanne, die das Kraftfahrzeug 2 zum Zurücklegen der Strecke von seinem aktuellen Standort bis zum Ausweichpunkt 9 benötigt, wird als Fahrerreaktionszeit eingestellt, in Abhängigkeit von welcher die Mindest-Fahrerreaktionszeit innerhalb der oberen Grenze und/oder der unteren Grenze ermittelt wird. Hierdurch können fehlerhafte Warnungen auf das Objekt 5 unterdrückt werden. Sollte der Fahrer nach Passieren des Ausweichpunkts 9 weiter entlang der Ist-Trajektorie 1 auf das Objekt 5 zufahren, kann eine Systemreaktion des Kraftfahrzeugs 2 bis hin zu einer Notbremsung des Kraftfahrzeugs 2 erfolgen. Somit wird eine Berechnung einer Kollisionswahrscheinlichkeit nicht komplett unterdrückt, sondern mit abgeschwächten Annahmen durchgeführt. Zum Auslösen der Notbremsung wird per Definition keine Fahrerreaktionszeit berücksichtigt und somit erfolgt diese unabhängig von der Mindest-Fahrerreaktionszeit, insbesondere nach Passieren des Ausweichpunkts 9. Durch das Verfahren wird eine Wahrscheinlichkeit einer Fehlwarnung besonders gering gehalten, da das Ausgeben des Warnhinweises insbesondere besonders spät erfolgt.

Alternativ zur Anpassung der Mindest-Fahrerreaktionszeit kann eine Modellierung der Bewegung des Kraftfahrzeugs 2 und somit eine Modellierung der Ist-Trajektorie 1 angepasst werden. Diese Anpassung der Ist-Trajektorie 1 des Kraftfahrzeugs 2 zur Reduzierung unerwünschter Fehlwarnungen kann zu einer Änderung des Ausgebens des Warnhinweises in einem Nutzenfall führen. Durch die Anpassung der Mindest-Fahrerreaktionszeit, statt einer Bewegungshypothese und somit der Ist-Trajektorie 1 des Kraftfahrzeugs 2, wird sichergestellt, dass lediglich unerwünschte Fehlauslösungen besonders gering gehalten werden, da ein akutes Risiko hinsichtlich Nebenspurobjekte weiterhin betrachtet wird. Lediglich eine Zeit zum Auslösen des Ausgebens des Warnhinweises im Innenraum des Kraftfahrzeugs 2 wird angepasst. Bei einer Anpassung der Bewegungshypothesen kann es vorkommen, dass auch ein akutes Kollisionsrisiko nicht zu einer Auslösung des Ausgebens des Warnhinweises führt und somit sind sicherheitskritische Szenarien möglich. Diese müssten gesondert abgesichert werden, was einen erheblichen Mehraufwand darstellt.

Insgesamt zeigt das Beispiel, wie durch die Erfindung ein Konzept zur Reaktionszeitanpassung zur Verminderung von Fehlauslösungen eines Notbremsassistenten umgesetzt werden kann.

## Patentansprüche

1. Verfahren zum Warnen eines Fahrers eines Kraftfahrzeugs (2) vor einer Kollision, mit den Schritten:
- Mittels einer Sensoreinrichtung: Ermitteln einer Ist-Trajektorie (1) des Kraftfahrzeugs (2);
- Mittels einer Recheneinrichtung: Ermitteln einer Soll-Trajektorie (3) des Kraftfahrzeugs (2);
- Mittels der Recheneinrichtung: Ermitteln einer Abweichung der Ist-Trajektorie (1) von der Soll-Trajektorie (3);
- Mittels der Recheneinrichtung: Ermitteln eines zukünftigen Kollisionsereignisses (8) mit einem als kollisionsrelevant eingestuften Objekt auf der Ist-Trajektorie (1);
- Mittels einer Ausgabeeinrichtung: Ausgeben eines Warnhinweises im Innenraum des Kraftfahrzeugs (2) in Abhängigkeit von dem ermittelten zukünftigen Kollisionsereignisses (8) und der ermittelten Abweichung,
wobei ein Ausweichpunkt (9) auf der Ist-Trajektorie (1) ermittelt wird, welcher einen spätestmöglichen Anfangszeitpunkt eines Ausweichmanövers zum Umgehen des Kollisionsereignisses (8) mit vorgegebenen Fahrparametern (10) des Kraftfahrzeugs (2) charakterisiert, und der Warnhinweis in Abhängigkeit von dem ermittelten Ausweichpunkt (9) ausgegeben wird,
**dadurch gekennzeichnet, dass**
die Soll-Trajektorie (3) in Abhängigkeit von einem Fahrbahnverlauf ermittelt wird, wobei der Fahrbahnverlauf in Abhängigkeit von einer Fahrspur (4) ermittelt wird, auf
welcher sich das Kraftfahrzeug (2) befindet, und der Fahrbahnverlauf als Soll-Trajektorie (3) definiert wird, wobei
der Warnhinweis ab einer definierten Mindest-Fahrerreaktionszeit vor einem voraussichtlichen Erreichen des ermittelten Ausweichpunktes (9) im Innenraum des Kraftfahrzeugs (2) ausgegeben wird, wobei bei Ermitteln des als kollisionsrelevant eingestuften Objekts (5) auf einer zu einer ersten Fahrspur (4) des Kraftfahrzeugs (2) unterschiedlichen zweiten Fahrspur (6) die Mindest-Fahrerreaktionszeit angepasst wird, wodurch ein im Vergleich zur Fahrerreaktionszeit vor der Anpassung späterer Warnzeitpunkt zum Ausgeben des Warnhinweises erzielt wird.

2. Verfahren nach Anspruch 1,
**dadurch gekennzeichnet, dass**
der Fahrbahnverlauf mittels Sensordaten und/oder in Abhängigkeit von Kartendaten ermittelt wird.

3. Verfahren nach einem der vorhergehenden Ansprüche,
**dadurch gekennzeichnet, dass**
das von dem Ausweichpunkt (9) startende Ausweichmanöver einen Bewegungsverlauf charakterisiert, bei welchem das Kraftfahrzeug (2) zu einem ermittelten Kollisionszeitpunkt des Kollisionsereignisses (8) und/oder in einer ermittelten Kollisionsentfernung (11) zum Ausweichpunkt (9) die Soll-Trajektorie (3) erreicht.

4. Verfahren nach einem der vorhergehenden Ansprüche,
**dadurch gekennzeichnet, dass**
der Ausweichpunkt (9) in Abhängigkeit von der ermittelten Abweichung zwischen der Ist-Trajektorie (1) und der Soll-Trajektorie (3) ermittelt wird.

5. Verfahren nach einem der vorhergehenden Ansprüche,
**dadurch gekennzeichnet, dass**
die ermittelte Mindest-Fahrerreaktionszeit durch wenigstens eine definierte Grenze nach oben und/oder nach unten begrenzt wird.

6. Verfahren nach einem der vorhergehenden Ansprüche,
**dadurch gekennzeichnet, dass**
die Ist-Trajektorie (1) in Abhängigkeit von einer Beschleunigung und/oder Geschwindigkeit und/oder Bewegungsrichtung des Kraftfahrzeugs (2) ermittelt wird.

7. Verfahren nach einem der vorhergehenden Ansprüche,
**dadurch gekennzeichnet, dass**
das Kollisionsereignis (8) in Abhängigkeit von einer Position und/oder Bewegung eines Objektes (5) ermittelt wird, welches voraussichtlich gleichzeitig mit dem Kraftfahrzeug (2) eine Kollisionsposition (7) der Ist-Trajektorie (1) erreicht.

## Claims

1. Method for warning a driver of a motor vehicle (2) about a collision, having the steps of:
- using a sensor device: ascertaining an actual trajectory (1) of the motor vehicle (2);
- using a computing device: ascertaining a target trajectory (3) of the motor vehicle (2);
- using the computing device: ascertaining a variance of the actual trajectory (1) from the target trajectory (3);
- using the computing device: ascertaining a future collision event (8) with an object categorized as relevant to a collision on the actual trajectory (1) ;
- using an output device: outputting a warning in the interior of the motor vehicle (2) on the basis of the ascertained future collision event (8) and the ascertained variance,
wherein an avoidance point (9) on the actual trajectory (1) is ascertained that characterizes a latest possible starting time for an avoidance manoeuvre to circumvent the collision event (8) with predefined driving parameters (10) relating to the motor vehicle (2), and the warning is output on the basis of the ascertained avoidance point (9),
**characterized in that**
the target trajectory (3) is ascertained on the basis of a road profile, the road profile being ascertained on the basis of a lane (4) that the motor vehicle (2) is in and the road profile being defined as a target trajectory (3), wherein
the warning is output in the interior of the motor vehicle (2) from a defined minimum driver reaction time before the ascertained avoidance point (9) will probably be reached, wherein
ascertainment of the object (5) categorized as relevant to a collision in a second lane (6), which is different from a first lane (4) of the motor vehicle (2), results in the minimum driver reaction time being adapted, as a result of which a later warning time compared with the driver reaction time before the adaptation is achieved for output of the warning.

2. Method according to Claim 1,
**characterized in that**
the road profile is ascertained by means of sensor data and/or on the basis of map data.

3. Method according to either of the preceding claims,
**characterized in that**
the avoidance manoeuvre starting from the avoidance point (9) characterizes a motion profile that results in the motor vehicle (2) achieving the target trajectory (3) at an ascertained collision time of the collision event (8) and/or at an ascertained collision distance (11) from the avoidance point (9).

4. Method according to one of the preceding claims,
**characterized in that**
the avoidance point (9) is ascertained on the basis of the ascertained variance between the actual trajectory (1) and the target trajectory (3).

5. Method according to one of the preceding claims,
**characterized in that**
the ascertained minimum driver reaction time is limited upwards and/or downwards by at least one defined limit.

6. Method according to one of the preceding claims,
**characterized in that**
the actual trajectory (1) is ascertained on the basis of an acceleration and/or speed and/or direction of movement of the motor vehicle (2).

7. Method according to one of the preceding claims,
**characterized in that**
the collision event (8) is ascertained on the basis of a position and/or movement of an object (5) that will probably reach a collision position (7) on the actual trajectory (1) at the same time as the motor vehicle (2).

## Revendications

1. Procédé permettant de mettre en garde un conducteur d'un véhicule automobile (2) contre une collision, comprenant les étapes consistant à :
- au moyen d'un dispositif de détection : déterminer une trajectoire réelle (1) du véhicule automobile (2) ;
- au moyen d'un dispositif de calcul : déterminer une trajectoire de consigne (3) du véhicule automobile (2) ;
- au moyen du dispositif de calcul : déterminer un écart entre la trajectoire réelle (1) et la trajectoire de consigne (3) ;
- au moyen du dispositif de calcul : déterminer un événement de collision (8) à venir avec un objet classé comme pertinent pour la collision sur la trajectoire réelle (1) ;
- au moyen d'un dispositif d'émission : émettre un avertissement dans l'habitacle du véhicule automobile (2) en fonction de l'événement de collision (8) à venir déterminé et de l'écart déterminé,
un point d'évitement (9) étant déterminé sur la trajectoire réelle (1), lequel caractérise un moment de début le plus tardif possible d'une manoeuvre d'évitement pour contourner l'événement de collision (8) avec des paramètres de conduite (10) prédéfinis du véhicule automobile (2), et l'avertissement étant émis en fonction du point d'évitement (9) déterminé,
**caractérisé en ce que**
la trajectoire de consigne (3) est déterminée en fonction d'un tracé de la route,
dans lequel le tracé de la route est déterminé en fonction d'une voie de circulation (4) sur laquelle se trouve le véhicule automobile (2), et le tracé de la route étant défini comme trajectoire de consigne (3), dans lequel l'avertissement est émis dans l'habitacle du véhicule automobile (2) à compter d'un temps de réaction du conducteur minimal défini avant que le point d'évitement (9) déterminé ne soit probablement atteint, dans lequel le temps de réaction minimal du conducteur est adapté lors de la détermination de l'objet (5) classé comme pertinent pour la collision sur une deuxième voie de circulation (6) différente d'une première voie de circulation (4) du véhicule automobile (2), ce qui permet d'obtenir un moment d'avertissement plus tardif pour émettre l'avertissement par rapport au temps de réaction du conducteur avant ladite adaptation.

2. Procédé selon la revendication 1,
**caractérisé en ce que**
le tracé de la route est déterminé au moyen de données de capteurs et/ou en fonction de données cartographiques.

3. Procédé selon l'une des revendications précédentes,
**caractérisé en ce que**
la manoeuvre d'évitement démarrant à partir du point d'évitement (9) caractérise une évolution du mouvement selon laquelle le véhicule automobile (2) atteint la trajectoire de consigne (3) à un moment de collision déterminé de l'événement de collision (8) et/ou à une distance de collision (11) déterminée par rapport au point d'évitement (9).

4. Procédé selon l'une des revendications précédentes,
**caractérisé en ce que**
le point d'évitement (9) est déterminé en fonction de l'écart déterminé entre la trajectoire réelle (1) et la trajectoire de consigne (3).

5. Procédé selon l'une des revendications précédentes,
**caractérisé en ce que**
le temps de réaction du conducteur minimal déterminé est limité vers le haut et/ou vers le bas par au moins une limite définie.

6. Procédé selon l'une des revendications précédentes,
**caractérisé en ce que**
la trajectoire réelle (1) est déterminée en fonction d'une accélération et/ou d'une vitesse et/ou d'une direction de déplacement du véhicule automobile (2).

7. Procédé selon l'une des revendications précédentes,
**caractérisé en ce que**
l'événement de collision (8) est déterminé en fonction d'une position et/ou d'un mouvement d'un objet (5) qui atteindra probablement une position de collision (7) de la trajectoire réelle (1) en même temps que le véhicule automobile (2).
